# EUROPÄISCHE PATENTSCHRIFT

(11) **EP 0 344 786 B1**
(45) Veröffentlichungstag und Bekanntmachung des Hinweises auf die Patenterteilung: **19.05.1993**
(21) Anmeldenummer: 89109955.8
(22) Anmeldetag: 01.06.1989
(51) Int. Cl.: A23L 1/03, A23C 9/123

(54) **Mittel zur Bekämpfung von Clostridien**
Inhibiting agent for clostridia
Agent pour combattre et inhiber les clostridia

(30) Priorität: 03.06.1988 DE 3819012
(43) Veröffentlichungstag der Anmeldung: 06.12.1989
(73) Patentinhaber: Schuler, Angelo, D-82328 Berg (DE)
(72) Erfinder: Schuler, Angelo, D-82328 Berg (DE)
(74) Vertreter: Huber, Bernhard, Dipl.-Chem.

(56) Entgegenhaltungen:
- EP-A- 0 281 467
- DE-A- 2 421 084
- FR-A- 2 508 282
- NL-A- 7 906 522
- DERWENT FILE SUPPLIER WPI(L), AN-88059795, 1988, Derwent Publications, London, GB; & JP-A-63 014 656 (MEIJI MILK PRODS) 21-01-1988
- DERWENT FILE SUPPLIER WPI(L), AN-88-287191, 1988, Derwent Publications Ltd, London, GB; & EP-A-285 979 (MILE INC.) 12-10-1988, & US-A-87 034 632 (06-04-1987)

## Beschreibung

Die Erfindung betrifft ein diätetisches Mittel zur Bekämpfung und Hemmung von Clostridien im Darm und seine Herstellung.

Im menschlichen Darm siedeln eine Vielzahl von Bakterienarten, darunter auch Clostridien. Sofern eine Normalbesiedelung (Eubiose) vorliegt, ist Clostridium perfringens der Hauptvertreter der im Darm nachweisbaren Clostridien. Unter bestimmten Umständen, vor allem nach Antibiotika-Einnahmen, kann es jedoch zu einer möglicherweise sogar dauerhaften Fehlbesiedelung des Darmes kommen, wobei oftmals Keime der Dickdarmflora auch in höhere Dünndarmbereiche aufsteigen können (sogenannter "small bowel overgrowth"). Derartige Fehlbesiedelungen werden als Dysbiosen bezeichnet. Im Verlaufe solcher Fehlbesiedelungen ist es möglich, daß sich diese Clostridien übermäßig vermehren, was für den Betroffenen stets mit sehr unangenehmen, ja sogar gefährlichen Folgen verbunden ist. Es können nämlich in der Folge Krankheitsbilder, wie z. B. das Roemheld-Syndrom auftreten, die den Patienten in erheblichem Maße beeinträchtigen, aufgrund dessen, daß Clostridien Kohlehydrate unter heftiger Gasbildung spalten. Dies manifestiert sich im Auftreten massiver Blähungen. Weiter können Clostridien Toxine bilden, die von der Darmwand aufgenommen werden und über den enterohepatischen Kreislauf einer Entgiftung zugeführt werden müssen. In jüngster Zeit ist auch bekannt geworden, daß einige Clostridienarten zumindest mitverantwortlich dafür sein können, daß in den westlichen Industrieländern Darmkrebs in wesentlich häufigerem Maße auftritt als in Entwicklungsländern. Eine spezielle Clostridienart, nämlich Cl. difficile, konnte als Erreger einer oft fatal verlaufenden Erkrankung im Gefolge einer antibiotischen Therapie erkannt werden.

Aus DE-A-24 21 084 ist ein Präparat, enthaltend Bifidobakterien, bekannt, welches den Aufbau einer protektiven Primärflora, einer sogenannten Schutzmantelflora, bei Ferkeln bewirkt. Diese Schutzmantelflora sollte Tiere ganz allgemein vor Erkrankungen schützen. Die EP-A-0 281 467 (Stand der Technik gemäß Art. 54(3)EPÜ) beschreibt ein Verfahren zur Herstellung einer Bifidobakterien enthaltenden fermentierten Milch, bei dem durch Zusatz von Lactobacillus casei-Stämmen eine erhöhte Überlebensrate der Bifidobakterien erhalten wird. Die EP-A-0 285 979 (Stand der Technik gemäß Art. 54(3)EPÜ) beschreibt ein Verfahren zur Erhöhung der Stabilität von gefriergetrockneten Kulturen von Milchsäure produzierenden Bakterien durch Zusatz von Cystin und einem Nahrungsmittelfüllstoff. Als Milchsäure produzierende Bakterien wird u.a. Lactobacillus delkbrueckii erwähnt. Aus JP-A-63014656 bzw. dem entsprechenden Derwent File Supplier WPI (L) Abstract AN-88059795, 1988 ist die Zugabe von verschiedenen Bifidobakterien-Stämmen zu Fleischprodukten in Form einer fermentierten Milch bekannt. Sämtliche Literaturstellen liefern jedoch keinerlei Hinweis auf eine Möglichkeit zur speziellen Bekämpfung von Clostridien.

Zur Bekämpfung von Clostridien sind aus der DE-OS 31 25 797 diätetische Mittel bekannt, die L. casei-Kulturen enthalten. Hierdurch wird es bereits ermöglicht, einige Clostridienarten der Intestinalflora, vor allem im Dünndarm, wo Lactobacillusarten vornehmlich bei gesunder Darmflora anzutreffen sind, zu bekämpfen. Es verbleiben jedoch weitere Clostridienarten (z.B. Clostridium innocuum, Clostridium tertium, Clostridium paraputrificum, Clostridium rectum), deren Bekämpfung mit dem Lactobacillus casei Mittel nicht befriedigend ist. Den genannten Clostridienarten ist gemeinsam, daß es sich um sog. NDH-Clostridienarten handelt (nuclear dehydrogenating clostridia), d.h. um Clostridienarten, die in der Lage sind, das Steroidgerüst der Gallensäuren so zu transformieren, daß daraus karzinogene oder cokarzinogene Aromate entstehen. Dazu kommen weitere Clostridienarten, die vornehmlich im Dickdarm siedeln und deren Bekämpfung mit Lactobazillus casei allein ebenfalls oft unzureichend ist.

Viele Nahrungsmittel wie Fleisch- und Fischerzeugnisse, Gemüse und Milchprodukte und insbesondere Fertigprodukte wie Salatsaucen, Majonnaisen oder Cremes, die einen idealen Nährboden für das Mikroorganismenwachstum bieten, sind leicht verderblich und können durch Ansäuerung bis zu einem gewissen Grad vor dem Verderben bewahrt werden. Die Ansäuerung schützt die Lebensmittel vor einer Vielzahl von pathogenen Keimen und auch vor Fäulniserregern, nicht aber vor einem Befall mit Clostridien. Eine ganze Reihe von Clostridienarten sind ubiquitär verbreitet und finden sich z.B. in Gewürzen. Daher sind angesäuerte Lebensmittel, denen Gewürze zugesetzt wurden, der Gefahr einer Kontamination mit Clostridien ausgesetzt. Gefährlich ist dabei insbesondere Clostridium perfringens, das Enterotoxin bildet.

Es war deshalb Aufgabe der Erfindung, Mittel zur wirksamen Hemmung und Bekämpfung von Clostridien bereitzustellen, die einerseits die Möglichkeit bieten, Nahrungsmittel ohne Geschmackseinbußen zu stabilisieren und andererseits die Möglichkeit zur Bekämpfung eines breiteren Spektrums von Clostridien im Dickdarm zu schaffen.

Gegenstand der Erfindung ist deshalb ein Mittel zur Bekämpfung und Hemmung von Clostridien, bestehend im wesentlichen aus Kulturen von Lactobacillus gasseri und/oder Lactobacillus delbrueckii gegebenenfalls zusammen mit Bifidobacterium longum in einem geeigneten Nährmedium.

Überraschenderweise gelingt es mit dem erfindungsgemäßen Mittel, das Clostridien-Wachstum zu hemmen, wobei sich durch Hemmstoffbildung die Stämme nicht mehr vermehren können.

Das erfindungsgemäße Mittel besteht aus Kulturen der genannten Bakterienstämme in einem geeigneten Nährmedium. Als geeignete Nährmedien kommen alle in physiologischer, diätetischer oder geschmacklicher Hinsicht geeigneten Nährlösungen in Betracht. Bevorzugt werden Milchprodukte wie Molke und insbesondere Magermilch und besonders bevorzugt Sojamilch eingesetzt. Die Nährmedien können mit weiteren Zusätzen versehen sein, die vorzugsweise in dem fertigen Nährmedium in Mengen von 0,1 bis 1 Gew.-/Vol. enthalten sind. Wird das erfindungsgemäße Mittel zur Bekämpfung von Clostridien im Darm verwendet, so kann es zusätzlich noch die Verdauung fördernde Stoffe enthalten. Insbesondere bei Verwendung von Magermilch, die üblicherweise aus Trockenmagermilch und Wasser bereitet wird, hat sich ein Zusatz von Hefeextrakt und/oder Pepton als zweckmäßig erwiesen. Vorzugsweise setzt man 0,4 bis 0,6 Gew.-% Hefeextrakt und 0,4 bis 0,6 Gew.-% Pepton, bezogen auf das Volumen der Lösung, zu. Das erfindungsgemäße Mittel kann außerdem noch weitere übliche Zusätze wie z.B. Glucose, β-Lactose und/oder Lactulose enthalten.

In einer bevorzugten Ausführungsform enthält das erfindungsgemäße Mittel außerdem noch eine Symbionten-Kultur, die aus L. bifidus- und L. acidophilus-Stämmen besteht. Das erfindungsgemäße Mittel kann in flüssiger oder fester Form aufbewahrt und gehandelt werden. Am zweckmäßigsten wird das Mittel in gefriergetrockneter Form verwendet. Es enthält, bezogen auf den gefriergetrockneten Zustand, vorzugsweise 10⁶ bis 10¹⁰, insbesondere 10⁸ bis 10⁹ lebende Zellen der genannten Stämme pro Gramm. Das Mittel kann ebenso als gekühlte Kulturlösung direkt verwendet oder mit anderen diätetischen Mitteln gemischt werden.

Bevorzugt enthält das erfindungsgemäße Mittel Kulturen von Lactobacillus gasseri, Stamm DSM 4591 und/oder Lactobacillus delbrueckii, Stamm DSM 4590 und gegebenenfalls Bifidobacterium longum, Stamm DSM 4589.

Das erfindungsgemäße Mittel eignet sich sowohl zur Bekämpfung von Clostridien auf Lebensmitteln als auch als therapeutisches Mittel zur Bekämpfung von Clostridien im Darm. Ein weiterer Gegenstand der Erfindung ist daher die Verwendung des erfindungsgemäßen Mittels zur Bekämpfung von Clostridien auf Lebensmitteln.

Dazu wird vorzugsweise das erfindungsgemäße Mittel direkt zur Ansäuerung statt anderer Säuerungsmittel verwendet. Die durch die Verwendung des erfindungsgemäßen Mittels erreichte Säuerung des Produktes schützt das Lebensmittel einmal durch Schaffung eines sauren Milieus, das die Fäulniserreger und pathogenen Keime hemmt und andererseits durch Hemmung des Clostridien-Wachstums. Auf diese Weise kann ein sehr wirksamer Schutz ohne Geschmackseinbußen erzielt werden.

Außerdem eignet sich das erfindungsgemäße Mittel sehr gut zur Behandlung von Menschen, aber auch von Tieren, bei denen eine deutlich vermehrte Clostridienzahl in der Darmflora festgestellt wurde. Das vermehrte Clostridien-Wachstum ist durch Bildung starker Blähungen sehr unangenehm und kann außerdem bei enterotoxinbildenden Stämmen zu sehr schwerwiegenden Krankheitsbildern führen. Mit dem erfindungsgemäßen Mittel können nun auch Clostridienarten bekämpft werden, die mit den bisher, z.B. aus DE-OS 31 25 797 bekannten Mitteln, weniger effektiv behandelt werden können. Darüber hinaus kann durch Variation der eingesetzten Stämme die Behandlung auf den einzelnen Patienten abgestimmt werden.

Wenn das erfindungsgemäße Mittel in gefriergetrockneter Form vorliegt, so erfolgt die Anwendung vorzugsweise so, daß etwa ein Teelöffel davon in einem Glas lauwarmem Wasser verrührt wird und diese Suspension sofort getrunken wird. Die Häufigkeit der Verabreichung richtet sich dabei insbesondere nach der Schwere der Erkrankung und dem allgemeinen Zustand der zu behandelnden Person. Sie erfolgt zweckmäßigerweise ein- bis dreimal pro Tag, vorzugsweise nach der Nahrungsaufnahme, z.B. nach dem Frühstück und gegebenenfalls nach den übrigen Mahlzeiten. Ein Gehalt an Symbiontenkultur von L. bifidus und L. acidophilus beschleunigt und erleichtert dabei die Wiederherstellung des gesunden Normalzustandes der Darmflora.

Für die Verwendung zur Hemmung des Clostridien-Wachstums auf Lebensmitteln wird das erfindungsgemäße Mittel ebenfalls vorzugsweise in gefriergetrockneter Form angewendet. Das Mittel wird so dosiert, daß eine geschmacklich als angenehm empfundene Säuerung eintritt. Die Dosierung hängt dabei von der Art des Lebensmittels ab. Als vorteilhaft haben sich Mengen von 5 bis 15 % erwiesen.

Bei Lebensmitteln, die unter alleiniger oder überwiegender Verwendung von Milch oder Milchprodukten hergestellt werden, kann die Stabilisierung ganz einfach erfolgen, indem das Lebensmittel selbst als Nährmedium dient und die Kultivierung der erfindungsgemäß verwendeten Mikroorganismen direkt in dem Lebensmittel erfolgt. Das Verfahren erfolgt dann in Analogie zu bekannten Herstellungsmethoden bei Sauermilch. Bei anderen Lebensmitteln kann das erfindungsgemäße Mittel direkt zur Säuerung eingesetzt werden, Beispiel sind hier Fischmarinaden.

Weiterer Gegenstand der Erfindung ist ein Verfahren zur Herstellung des erfindungsgemäßen Mittels, das dadurch gekennzeichnet ist, daß man ein Nährmedium mit jeweils einer Reinkultur von L. gasseri und/oder L. delbrueckii und ggf. Bifidobacterium longum beimpft, die Kultur bebrütet, kühlt und gegebenenfalls in eine andere, zur Verabreichung geeignete Form bringt. Bevorzugt werden dazu die bei der DSM hinterlegten Stämme der oben genannten Bakterien verwendet. Nach der Kühlung wird das Mittel vorzugsweise gefriergetrocknet.

Die Bebrütungszeit hängt von der Temperatur ab. Vorzugsweise wird während 15 bis 30 Stunden bei einer Temperatur von 15 bis 45°C bebrütet und insbesondere während 24 Stunden bei 37 ± 2°C. Während der Züchtung hält man vorzugsweise den pH-Wert zwischen 5,7 und 5,9, zweckmäßig durch Zugabe von Alkali. Besonders geeignet ist Kalkmilch, die man in der Regel zwei- bis viermal während der Züchtung zudosiert. Als Nährmedium sind die üblichen Nährlösungen geeignet. Vorzugsweise werden Milchprodukte wie Magermilch und/oder Molke sowie Sojamilch eingesetzt.

Der Zusatz des erfindungsgemäßen Mittels zu Nahrungsmitteln bewahrt diese nicht nur vor der Verderbnis, sondern wirkt sich darüber hinaus auch noch vorteilhaft für den Verbraucher aus, da zusätzlich eine Hemmung der Clostridien im Magen-Darm-Trakt erfolgt.

Ein weiterer Gegenstand der Erfindung ist die Verwendung von Bifidobacterium longum alleine zur Herstellung eines Arzneimittels zur Bekämpfung und Hemmung von Clostridien. So führt die Verwendung von Bifidobacterium longum, einem Stamm, der normalerweise im Dickdarm angesiedelt ist, zu einer effizienten Behandlung von Clostridien im Dickdarm. Nach Verabreichung des erfindungsgemäßen Mittels beobachtet man in diesen Fällen in der Regel bereits in den ersten Tagen nach Einnahme eine deutliche Besserung, d.h. einen Rückgang der Blähungen. Eine gleichzeitig durchgeführte bakteriologische Stuhluntersuchung zeigte in diesen Fällen eine deutliche Abnahme der Zahl der aus einer Stuhlprobe anzüchtbaren Clostridien.

Die Erfindung wird durch das folgende Beispiel erläutert.

### Beispiel 1

Eine aus Sojamilchpulver und Wasser bereitete Nährlösung, der, bezogen auf die fertige Nährlösung, je 0,5 Gew.-% Hefeextrakt und Pepton zugesetzt wurden, wird mit einer Reinkultur von L. gasseri, DSM 4591, L. delbrückii, DSM 4590 oder Bifidobacterium longum, DSM 4589, beimpft. Die Kulturen werden während 24 Stunden bei einer Temperatur von 37°C bebrütet. Nach jeweils etwa 8 Stunden wird der pH-Wert auf 5,8 bis 5,9 nachgestellt durch Zusatz der erforderlichen Menge Kalkmilch. Danach werden die Kulturen gekühlt und gefriergetrocknet. Das auf diese Weise erhaltene Lyophilisat der drei Kulturen wird kühl gelagert. Zur Verabreichung werden die Produkte mit lauwarmem Wasser (ca. 1 Teelöffel auf 1/4 l Wasser) verrührt und die erhaltene Suspension sofort getrunken.

In zwei weiteren Ansätzen wurde Magermilch bzw. Molke als Nährmedium verwendet.

### Beispiel 2

Magermilch wurde mit 0,5 % Hefeextrakt, 1 % Kochsalz sowie 5 % einer Kultur von Lactobacillus casei, Lactobacillus delbrückii bzw. Bifidobacterium longum versetzt. In diese Marinade wurden frische Heringsfilets bzw. gewässerte Salzheringe eingelegt. Die in der Marinade eingelegten Fischteile wurden bei einer Temperatur von 25 bis 35°C so lange bebrütet, bis ein pH-Wert von mindestens 5,8 erreicht war. Eine weitergehende Säuerung könnte erfolgen und richtet sich nach den geschmacklichen Wünschen. Nach Erreichen des gewünschten Säuregrades wurden weitere geschmacksverbessernde Zusätze hinzugefügt wie Zwiebeln, Knoblauch und Gewürze. Gerade die in Gewürzen besonders zahlreich vertretenen Clostridienarten wurden durch die Ansäuerung durch die erfindungsgemäßen Mikroorganismen nachhaltig am Auskeimen der Sporen und damit am Wachstum gehindert.

### Beispiel 3

Es wurde eine Salatsauce hergestellt. Dazu wurde Magermilch mit einem Zusatz von 0,5 % Hefeextrakt und 5 % einer Kultur von L. casei, L. delbrückii oder Bifidobacterium longum versehen. Anschließend wurde diese Mischung bei 25 bis 35°C bebrütet. Nach Abkühlung wurden zur geschmacklichen Abstimmung Gewürze und Zucker zugegeben.

## Patentansprüche (Patentansprüche für folgende(n) Vertragsstaat(en): AT, CH, LI)

1. Mittel zur Bekämpfung und Hemmung von Clostridien, bestehend im wesentlichen aus Kulturen von Lactobacillus gasseri und/oder Lactobacillus delbrueckii gegebenenfalls zusammen mit Bifidobacterium longum in einem geeigneten Nährmedium.

2. Mittel nach Anspruch 1,
**dadurch gekennzeichnet,**
daß das Nährmedium Sojamilch, Magermilch und/oder Molke ist.

3. Mittel nach Anspruch 1 oder 2,
**dadurch gekennzeichnet,**
daß das Nährmedium Zusätze von Hefeextrakt und/oder Peptonen und/oder die Verdauung fördernden Stoffen enthält.

4. Mittel nach einem der Ansprüche 1 bis 3,
**dadurch gekennzeichnet,**
daß es in gefriergetrockneter Form vorliegt und bezogen auf den gefriergetrockneten Zustand 10⁶ bis 10¹⁰ lebende Zellen mindestens eines der genannten Stämme pro Gramm enthält.

5. Mittel nach einem der vorhergehenden Ansprüche,
**dadurch gekennzeichnet,**
daß es Lactobacillus gasseri, Stamm DSM 4591 und/oder Lactobacillus delbrueckii, Stamm DSM 4590 und gegebenenfalls Bifidobacterium longum, Stamm DSM 4589, enthält.

6. Mittel nach einem der vorhergehenden Ansprüche,
**dadurch gekennzeichnet,**
daß es zusätzlich eine Symbionten-Kultur von L. acidophilus und L. bifidus enthält.

7. Verwendung des Mittels nach einem der Ansprüche 1 bis 6 zur Verhinderung des Clostridien-Wachstums auf Nahrungsmitteln.

8. Verfahren zur Herstellung des Mittels nach einem der Ansprüche 1 bis 6
**dadurch gekennzeichnet,**
daß man ein Nährmedium mit jeweils einer Reinkultur von L. gasseri und/oder L. delbrueckii und gegebenenfalls Bifidobacterium longum beimpft, die Kultur bebrütet, kühlt und gegebenenfalls in eine andere, zur Verabreichung geeignete Form bringt.

9. Verfahren nach Anspruch 8
**dadurch gekennzeichnet,**
daß man nach dem Kühlen lyophilisiert.

10. Verfahren nach Anspruch 8 oder 9,
**dadurch gekennzeichnet,**
daß die Bebrütung während 15 bis 30 Stunden bei einer Temperatur von 15 bis 45°C durchgeführt wird.

11. Verfahren nach einem der Ansprüche 8 bis 10,
**dadurch gekennzeichnet,**
daß man den pH-Wert während der Züchtung zwischen 5,7 und 5,9 hält.

12. Verwendung von Bifidobacterium longum zur Herstellung eines Arzneimittels zur Bekämpfung und Hemmung von Clostridien.

## Patentansprüche (Patentansprüche für folgende(n) Vertragsstaat(en): DE)

1. Mittel zur Bekämpfung und Hemmung von Clostridien, bestehend im wesentlichen aus Kulturen von Lactobacillus gasseri und/oder Lactobacillus delbrueckii gegebenenfalls zusammen mit Bifidobacterium longum in einem geeigneten Nährmedium, mit der Maßgabe, daß Lactobacillus delbrueckii nicht alleine vorliegt.

2. Mittel nach Anspruch 1,
**dadurch gekennzeichnet,**
daß das Nährmedium Sojamilch, Magermilch und/oder Molke ist.

3. Mittel nach Anspruch 1 oder 2,
**dadurch gekennzeichnet,**
daß das Nährmedium Zusätze von Hefeextrakt und/oder Peptonen und/oder die Verdauung fördernden Stoffen enthält.

4. Mittel nach einem der Ansprüche 1 bis 3,
**dadurch gekennzeichnet,**
daß es in gefriergetrockneter Form vorliegt und bezogen auf den gefriergetrockneten Zustand 10⁶ bis 10¹⁰ lebende Zellen mindestens eines der genannten Stämme pro Gramm enthält.

5. Mittel nach einem der vorhergehenden Ansprüche,
**dadurch gekennzeichnet,**
daß es Lactobacillus gasseri, Stamm DSM 4591 und/oder Lactobacillus delbrueckii, Stamm DSM 4590, und gegebenenfalls Bifidobacterium longum, Stamm DSM 4589, enthält.

6. Mittel nach einem der vorhergehenden Ansprüche,
**dadurch gekennzeichnet,**
daß es zusätzlich eine Symbionten-Kultur von L. acidophilus und L. bifidus enthält.

7. Verwendung des Mittels nach einem der Ansprüche 1 bis 6 einschließlich einer Kultur von L. delbrueckii alleine zur Verhinderung des Clostridien-Wachstums auf Nahrungsmitteln.

8. Verfahren zur Herstellung des Mittels nach einem der Ansprüche 1 bis 6
**dadurch gekennzeichnet,**
daß man ein Nährmedium mit jeweils einer Reinkultur von L. gasseri und/oder L. delbrueckii und gegebenenfalls Bifidobacterium longum beimpft, die Kultur bebrütet, kühlt und gegebenenfalls in eine andere, zur Verabreichung geeignete Form bringt.

9. Verfahren nach Anspruch 8
**dadurch gekennzeichnet,**
daß man nach dem Kühlen lyophilisiert.

10. Verfahren nach Anspruch 8 oder 9,
**dadurch gekennzeichnet,**
daß die Bebrütung während 15 bis 30 Stunden bei einer Temperatur von 15 bis 45°C durchgeführt wird.

11. Verfahren nach einem der Ansprüche 8 bis 10,
**dadurch gekennzeichnet,**
daß man den pH-Wert während der Züchtung zwischen 5,7 und 5,9 hält.

12. Therapeutisches Mittel zur Bekämpfung und Hemmung von Clostridien, bestehend im wesentlichen aus einer Kultur von Lactobacillus delbrueckii.

13. Verwendung von Bifidobacterium longum zur Herstellung eines Arzneimittels zur Bekämpfung und Hemmung von Clostridien.

## Claims (Claims for the following Contracting State(s): AT, CH, LI)

1. Agent for the control and inhibition of clostridia consisting essentially of cultures of Lactobacillus gasseri and/or Lactobacillus delbrueckii, if desired, together with Bifidobacterium longum in a suitable nutrient medium.

2. Agent as claimed in claim 1,
**wherein**
the nutrient medium is soya milk, skimmed milk and/or whey.

3. Agent as claimed in claim 1 or 2,
**wherein**
the nutrient medium contains additions of yeast extract and/or peptones and/or substances which aid digestion.

4. Agent as claimed in one of the claims 1 to 3,
**wherein**
it is present in a freeze-dried form and with respect to the freeze-dried state contains 10⁶ to 10¹⁰ living cells of at least one of the said strains per gram.

5. Agent as claimed in one of the previous claims,
**wherein**
it contains Lactobacillus gasseri, DSM 4591 strain and/or Lactobacillus delbrueckii, DSM 4590 strain and, if desired, Bifidobacterium longum, DSM 4589 strain.

6. Agent as claimed in one of the previous claims,
**wherein**
it additionally contains a symbiont culture of L. acidophilus and L. bifidus.

7. Use of the agent as claimed in one of the claims 1 to 6 for preventing growth of clostridia on foodstuffs.

8. Process for the production of the agent as claimed in one of the claims 1 to 6,
**wherein**
a nutrient medium is in each case inoculated with a pure culture of L. gasseri and/or L. delbrueckii and, if desired, Bifidobacterium longum, the culture is incubated, cooled and, if desired, brought into another form suitable for administration.

9. Process as claimed in claim 8,
**wherein**
one lyophilizes after the cooling.

10. Process as claimed in claim 8 or 9,
**wherein**
the incubation is carried out for 15 to 30 hours at a temperature of 15 to 45°C.

11. Process as claimed in one of the claims 8 to 10,
**wherein**
the pH value is kept between 5.7 and 5.9 during the culture.

12. Use of Bifidobacterium longum for the production of a pharmaceutical agent for the control and inhibition of clostridia.

## Claims (Claims for the following Contracting State(s): DE)

1. Agent for the control and inhibition of clostridia consisting essentially of cultures of Lactobacillus gasseri and/or Lactobacillus delbrueckii, if desired, together with Bifidobacterium longum in a suitable nutrient medium provided that Lactobacillus delbrueckii is not present alone.

2. Agent as claimed in claim 1,
**wherein**
the nutrient medium is soya milk, skimmed milk and/or whey.

3. Agent as claimed in claim 1 or 2,
**wherein**
the nutrient medium contains additions of yeast extract and/or peptones and/or substances which aid digestion.

4. Agent as claimed in one of the claims 1 to 3,
**wherein**
it is present in a freeze-dried form and with respect to the freeze-dried state contains 10⁶ to 10¹⁰ living cells of at least one of the said strains per gram.

5. Agent as claimed in one of the previous claims,
**wherein**
it contains Lactobacillus gasseri, DSM 4591 strain and/or Lactobacillus delbrueckii, DSM 4590 strain and, if desired, Bifidobacterium longum, DSM 4589 strain.

6. Agent as claimed in one of the previous claims,
**wherein**
it additionally contains a symbiont culture of L. acidophilus and L. bifidus.

7. Use of the agent as claimed in one of the claims 1 to 6 including a culture of L. delbrueckii alone for preventing growth of clostridia on foodstuffs.

8. Process for the production of the agent as claimed in one of the claims 1 to 6,
**wherein**
a nutrient medium is in each case inoculated with a pure culture of L. gasseri and/or L. delbrueckii and, if desired, Bifidobacterium longum, the culture is incubated, cooled and, if desired, brought into another form suitable for administration.

9. Process as claimed in claim 8,
**wherein**
one lyophilizes after the cooling.

10. Process as claimed in claim 8 or 9,
**wherein**
the incubation is carried out for 15 to 30 hours at a temperature of 15 to 45°C.

11. Process as claimed in one of the claims 8 to 10,
**wherein**
the pH value is kept between 5.7 and 5.9 during the culture.

12. Therapeutic agent for the control and inhibition of clostridia consisting essentially of a culture of Lactobacillus delbrueckii.

13. Use of Bifidobacterium longum for the production of a pharmaceutical agent for the control and inhibition of clostridia.

## Revendications (Revendications pour l'(les) Etat(s) contractant(s) suivant(s): AT, CH, LI)

1. Agent pour combattre et inhiber les clostridia, consistant essentiellement en des cultures de Lactobacillus gasseri et/ou de Lactobacillus delbrueckii éventuellement conjointement avec du Bifidobacterium longum dans un milieu nutritrif approprié.

2. Agent selon la revendication 1,
caractérisé en ce que
le milieu nutritif est du lait de soja, du lait écrémé et/ou du petit-lait.

3. Agent selon la revendication 1 ou 2,
caractérisé en ce que
le milieu nutritif contient des additifs d'extraits de levure et/ou de peptones et/ou de substances favorisant la digestion.

4. Agent selon l'une des revendications 1 à 3,
caractérisé en ce qu'il
se présente sous la forme lyophilisée et contient par rapport à l'état lyophilisé 10⁶ jusqu'à 10¹⁰ de cellules vivantes au moins de l'une des souches connues par gramme.

5. Agent selon l'une des revendications précédentes,
caractérisé en ce qu'il contient
du Lactobacillus gasseri, Souche DSM 4591 et/ou du Lactobacillus delbrueckii, Souche DSM 4590 et éventuellement du Bifidobacterium longum, Souche DSM 4589.

6. Agent selon l'une des revendications précédentes,
caractérisé en ce qu'il contient
de plus une culture de symbiotes de L. acidophilus et de L. bifidus.

7. Utilisation de l'agent selon l'une des revendications 1 à 6, destinée à empêcher la croissance de clostridia sur des produits alimentaires.

8. Procédé pour la préparation de l'agent selon l'une des revendications 1 à 6,
caractérisé en ce que
l'on inocule un milieu nutritif avec respectivement une culture pure de L. gasseri et/ou de L. delbrueckii et éventuellement de Bifidobacterium longum, on laisse incuber la culture, on la refrodit et éventuellement on l'amène dans une autre forme appropriée pour l'administration.

9. Procédé selon la revendication 8,
caractérisé en ce que
l'on procède à la lyophilisation après le refroidissement.

10. Procédé selon la revendication 8 ou 9,
caractérisé en ce que
l'incubation s'effectue pendant 15 à 30 heures à une température de 15 à 45°C.

11. Procédé selon l'une des revendications 8 à 10,
caractérisé en ce que
l'on maintient la valeur du pH pendant la culture entre 5,7 et 5,9.

12. Utilisation de Bifidobacterium longum pour la préparation d'un médicament destiné à combattre et à inhiber les clostridia.

## Revendications (Revendications pour l'(les) Etat(s) contractant(s) suivant(s): DE)

1. Agent pour combattre et inhiber les clostridia, consistant essentiellement en des cultures de Lactobacillus gasseri et/ou de Lactobacillus delbrueckii éventuellement conjointement avec Bifidobacterium longum dans un milieu nutritrif approprié, à condition que le Lactobacillus delbrueckii ne se présente pas seul.

2. Agent selon la revendication 1,
caractérisé en ce que
le milieu nutritif est du lait de soja, du lait écrémé et/ou du petit-lait.

3. Agent selon la revendication 1 ou 2,
caractérisé en ce que
le milieu nutritif contient des additifs d'extraits de levure et/ou de peptones et/ou de substances favorisant la digestion.

4. Agent selon l'une des revendications 1 à 3,
caractérisé en ce qu'il
se présente sous la forme lyophilisée et contient par rapport à l'état lyophilisé 10⁶ jusqu'à 10¹⁰ de cellules vivantes au moins de l'une des souches connues par gramme.

5. Agent selon l'une des revendications précédentes,
caractérisé en ce qu'il contient
du Lactobacillus gasseri, Souche DSM 4591 et/ou du Lactobacillus delbrueckii, Souche DSM 4590 et éventuellement du Bifidobacterium longum, Souche DSM 4589.

6. Agent selon l'une des revendications précédentes,
caractérisé en ce qu'il contient
de plus une culture de symbiotes de L. acidophilus et de L. bifidus.

7. Utilisation de l'agent selon l'une des revendications 1 à 6, y compris une culture de L. delbrueckii seule pour empêcher la croissance de clostridia sur des produits alimentaires.

8. Procédé pour la préparation de l'agent selon l'une des revendications 1 à 6,
caractérisé en ce que
l'on inocule un milieu nutritif avec respectivement une culture pure de L. gasseri et/ou de L. delbrueckii et éventuellement de Bifidobacterium longum, on laisse incuber la culture, on la refrodit et éventuellement on l'amène dans une autre forme appropriée pour l'administration.

9. Procédé selon la revendication 8,
caractérisé en ce que
l'on procède à la lyophilisation après le refroidissement.

10. Procédé selon la revendication 8 ou 9,
caractérisé en ce que
l'incubation s'effectue pendant 15 à 30 heures à une température de 15 à 45°C.

11. Procédé selon l'une des revendications 8 à 10,
caractérisé en ce que
l'on maintient la valeur du pH pendant la culture entre 5,7 et 5,9.

12. Agent thérapeutique destiné à combattre et à inhiber les clostridia consistant essentiellement en une culture de Lactobacillus delbrueckii.

13. Utilisation de Bifidobacterium longum pour la préparation d'un médicament destiné à combattre et à inhiber les clostridia.
